# EUROPEAN PATENT APPLICATION

(11) **EP 4 545 952 A1**
(43) Date of publication of application: **30.04.2025**
(21) Application number: 23826772.8
(22) Date of filing: 10.04.2023
(51) Int. Cl.: G01N 23/18, G01N 23/04, G01N 23/083

(54) **INFORMATION PROCESSING DEVICE, INFORMATION PROCESSING METHOD, AND INFORMATION PROCESSING PROGRAM**

(30) Priority: 21.06.2022 JP 2022099870
(71) Applicant: FUJIFILM Corporation, Tokyo 106-8620 (JP)
(72) Inventor: TANAKA, Eiichi, Tokyo 106-8620 (JP); INAGI, Seiya, Tokyo 106-8620 (JP); HAYASHI, Shinji, Tokyo 106-8620 (JP)
(74) Representative: Meissner Bolte Partnerschaft mbB
(86) International application number: PCT/JP2023/014617
(87) International publication number: WO 2023/248583

(57) **Abstract**

An information processing apparatus acquires a conversion parameter for converting a position in an inspection image captured by irradiating an inspection target object with radiation along an irradiation direction into a position in structure information representing a three-dimensional structure of the inspection target object, the conversion parameter including the irradiation direction in the structure information; and converts a position of a discontinuity of the inspection target object in the inspection image into a position in the structure information by using the conversion parameter.

## Description

### BACKGROUND OF THE INVENTION

### 1. Field of the Invention

The present disclosure relates to an information processing apparatus, an information processing method, and an information processing program.

### 2. Description of the Related Art

JP2007-192818A discloses a technique for non-destructive inspection of parts, including extracting a point cloud from a three-dimensional image generated using a plurality of tomographic images obtained by imaging a part with a computed tomography (CT) apparatus, and registering the extracted point cloud to a computer aided design (CAD) coordinate system.

### SUMMARY OF THE INVENTION

In the non-destructive inspection, it is preferable that information on a discontinuity in a two-dimensional inspection image captured by irradiating an inspection target object with radiation can be associated with a position of the discontinuity in a three-dimensional structure of the inspection target object. This is because the inspection efficiency can be improved by referring to the shape and texture information of the discontinuity in the two-dimensional inspection image and the position of the discontinuity in the three-dimensional structure of the inspection target object.

In a technique of identifying a three-dimensional position of a discontinuity from a three-dimensional image generated using a plurality of tomographic images, there is room for improvement from the viewpoint of the inspection efficiency of non-destructive inspection because an imaging apparatus such as a CT apparatus is expensive or it takes a relatively long time to capture the plurality of tomographic images.

The present disclosure has been made in view of the above circumstances, and an object thereof is to provide an information processing apparatus, an information processing method, and an information processing program that allow improvement of the inspection efficiency of non-destructive inspection.

An information processing apparatus according to a first aspect is an information processing apparatus including at least one processor, wherein the processor is configured to acquire a conversion parameter for converting a position in an inspection image captured by irradiating an inspection target object with radiation along an irradiation direction into a position in structure information representing a three-dimensional structure of the inspection target object, the conversion parameter including the irradiation direction in the structure information; and convert a position of a discontinuity of the inspection target object in the inspection image into a position in the structure information by using the conversion parameter

An information processing apparatus according to a second aspect is the information processing apparatus according to the first aspect, in which the processor is configured to derive a depth of the discontinuity along the irradiation direction, based on the inspection image; and derive, as a position of the discontinuity in the structure information, a position separated from a position corresponding to a surface of the inspection target object in the structure information by the derived depth along the irradiation direction.

An information processing apparatus according to a third aspect is the information processing apparatus according to the second aspect, in which the processor is configured to derive the depth of the discontinuity, based on a degree of blur of a region of the discontinuity in the inspection image.

An information processing apparatus according to a fourth aspect is the information processing apparatus according to the first aspect, in which a plurality of the inspection images are captured from a plurality of different irradiation directions, and the processor is configured to convert a position of the discontinuity in each of the plurality of the inspection images into a position in the structure information in a plane for which each of the irradiation directions is set as a viewpoint direction, by using the conversion parameter; and derive, as a position of the discontinuity in the structure information, an intersection point of a plurality of straight lines each extending along one of the irradiation directions and each passing through the position of the discontinuity after conversion for one of the plurality of the inspection images.

An information processing apparatus according to a fifth aspect is the information processing apparatus according to any one of the first aspect to the fourth aspect, in which the processor is configured to integrate the structure information and a position of the discontinuity in the structure information into data.

An information processing method according to a sixth aspect is an information processing method in which a processor included in an information processing apparatus executes processing including acquiring a conversion parameter for converting a position in an inspection image captured by irradiating an inspection target object with radiation along an irradiation direction into a position in structure information representing a three-dimensional structure of the inspection target object, the conversion parameter including the irradiation direction in the structure information; and converting a position of a discontinuity of the inspection target object in the inspection image into a position in the structure information by using the conversion parameter.

An information processing program according to a seventh aspect is an information processing program for causing a processor included in an information processing apparatus to execute processing including acquiring a conversion parameter for converting a position in an inspection image captured by irradiating an inspection target object with radiation along an irradiation direction into a position in structure information representing a three-dimensional structure of the inspection target object, the conversion parameter including the irradiation direction in the structure information; and converting a position of a discontinuity of the inspection target object in the inspection image into a position in the structure information by using the conversion parameter.

According to the present disclosure, the inspection efficiency of non-destructive inspection can be improved.

### BRIEF DESCRIPTION OF THE DRAWINGS

Fig. 1 is a block diagram illustrating a schematic configuration of a radiographic image capturing apparatus;
Fig. 2 is a block diagram illustrating an example of a hardware configuration of an information processing apparatus;
Fig. 3 is a diagram depicting structure information;
Fig. 4 is a diagram depicting a trained model;
Fig. 5 is a block diagram illustrating an example of a functional configuration of the information processing apparatus;
Fig. 6 is a diagram depicting a process of deriving an irradiation direction;
Fig. 7 is a diagram depicting a process of deriving a position of a discontinuity in the structure information;
Fig. 8 is a diagram depicting a relationship between a depth of a discontinuity and a degree of blur of a region of the discontinuity in an inspection image;
Fig. 9 is a diagram depicting a process of deriving a position of a discontinuity on the basis of a plurality of inspection images;
Fig. 10 is a flowchart illustrating an example of a discontinuity position conversion process; and
Fig. 11 is a diagram illustrating an example of an irradiation direction according to a modification.

### DESCRIPTION OF THE PREFERRED EMBODIMENTS

Hereinafter, exemplary embodiments for implementing the technology of the present disclosure will be described in detail with reference to the drawings.

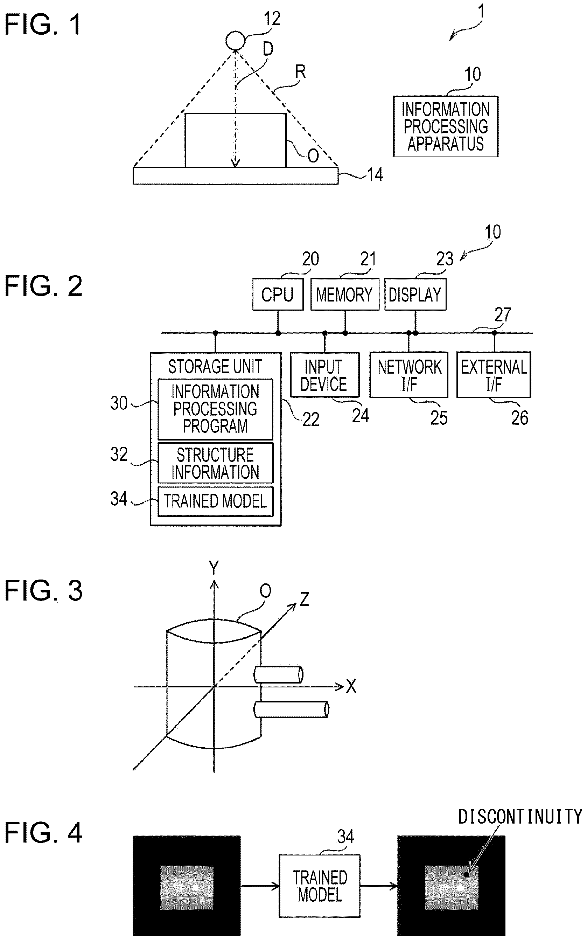

First, a configuration of a radiographic image capturing apparatus 1 according to the present embodiment will be described with reference to Fig. 1. The radiographic image capturing apparatus 1 is used for the non-destructive inspection of an inspection target object. As illustrated in Fig. 1, the radiographic image capturing apparatus 1 includes an information processing apparatus 10, a radiation source 12, and a radiation detector 14. The information processing apparatus 10, the radiation source 12, and the radiation detector 14 are communicably connected to each other. The information processing apparatus 10 is, for example, a computer such as a personal computer or a server computer.

The radiation source 12 irradiates an inspection target object O with radiation R such as X-rays. The radiation source 12 according to the present embodiment emits the radiation R in a cone-beam shape. A direction from the radiation source 12 to one point on the radiation detector 14 at which the radiation R transmitted through the inspection target object O arrives is referred to as an "irradiation direction D". In the present embodiment, a case where a direction from the radiation source 12 to one point on the radiation detector 14 at which the radiation R transmitted through the center of the inspection target object O arrives is set as the irradiation direction D will be described as an example.

The radiation detector 14 includes a scintillator as an example of a light emitting layer that emits light when irradiated with the radiation R, and a thin film transistor (TFT) substrate. The scintillator and the TFT substrate are laminated together. The TFT substrate includes a plurality of pixels arranged in a two-dimensional manner, and each pixel includes a field-effect thin film transistor and a sensor unit as an example of a conversion element in which generated charge increases as the amount of radiation to be emitted increases. The sensor unit absorbs light emitted by the scintillator to generate charge, and accumulates the generated charge. The field-effect thin film transistor converts the charge accumulated in the sensor unit into an electrical signal and outputs the electrical signal. With the above configuration, the radiation detector 14 generates a two-dimensional radiographic image corresponding to the radiation R emitted from the radiation source 12 to the inspection target object O, and outputs the generated radiographic image to the information processing apparatus 10.

In this manner, in the radiographic image capturing apparatus 1, a radiographic image captured by irradiating the inspection target object O with the radiation R from the radiation source 12 along the irradiation direction D is stored in the information processing apparatus 10. A radiographic image captured by irradiating the inspection target object O with the radiation R along the irradiation direction D is hereinafter referred to as an "inspection image".

Next, a hardware configuration of the information processing apparatus 10 according to the present embodiment will be described with reference to Fig. 2. As illustrated in Fig. 2, the information processing apparatus 10 includes a central processing unit (CPU) 20, a memory 21 serving as a temporary storage area, and a non-volatile storage unit 22. The information processing apparatus 10 further includes a display 23 such as a liquid crystal display, an input device 24 such as a keyboard and a mouse, and a network interface (I/F) 25 to be connected to a network. The information processing apparatus 10 further includes an external I/F 26 to which the radiation source 12 and the radiation detector 14 are to be connected. The CPU 20, the memory 21, the storage unit 22, the display 23, the input device 24, the network I/F 25, and the external I/F 26 are connected to a bus 27. The CPU 20 is an example of a processor according to the technology disclosed herein.

The storage unit 22 is implemented by a hard disk drive (HDD), a solid state drive (SSD), a flash memory, or the like. The storage unit 22 serving as a storage medium stores an information processing program 30. The CPU 20 reads the information processing program 30 from the storage unit 22, loads the information processing program 30 into the memory 21, and executes the loaded information processing program 30.

The storage unit 22 further stores an inspection image, structure information 32, and a trained model 34. The structure information 32 includes information representing a three-dimensional structure of the inspection target object O. As illustrated in Fig. 3, the structure information 32 according to the present embodiment is information used when a virtual inspection target object O is displayed on the display 23, and is information representing the three-dimensional structure of the inspection target object O by coordinates in an orthogonal coordinate system constituted by three axes, namely, an X axis, a Y axis, and a Z axis. The structure information 32 also includes materials of the parts of the inspection target object O. The material of each part specifies the transmittance of the radiation R through the part. Examples of the structure information 32 include design information such as CAD data.

As illustrated in Fig. 4, the trained model 34 is a trained model that receives an inspection image as an input and outputs information on a discontinuity of the inspection target object O in the inspection image as the input, and is a trained model trained by using a plurality of sets of inspection images and information on a discontinuity of the inspection target object O in the inspection images as learning data (also referred to as labeled training data). Examples of the information on the discontinuity include the position of the discontinuity in the inspection image, the size of the discontinuity, and the shape of the discontinuity. In the present embodiment, the position of the discontinuity in the inspection image is represented by coordinates in an orthogonal coordinate system in which a specific point (e.g., a point at the upper left corner) of the two-dimensional inspection image is taken as the origin and that is constituted by two axes, namely, an X axis and a Y axis. In this specification, the "discontinuity" is defined as a term of non-destructive inspection and means a discontinuity such as a bubble, a foreign substance, or a crack.

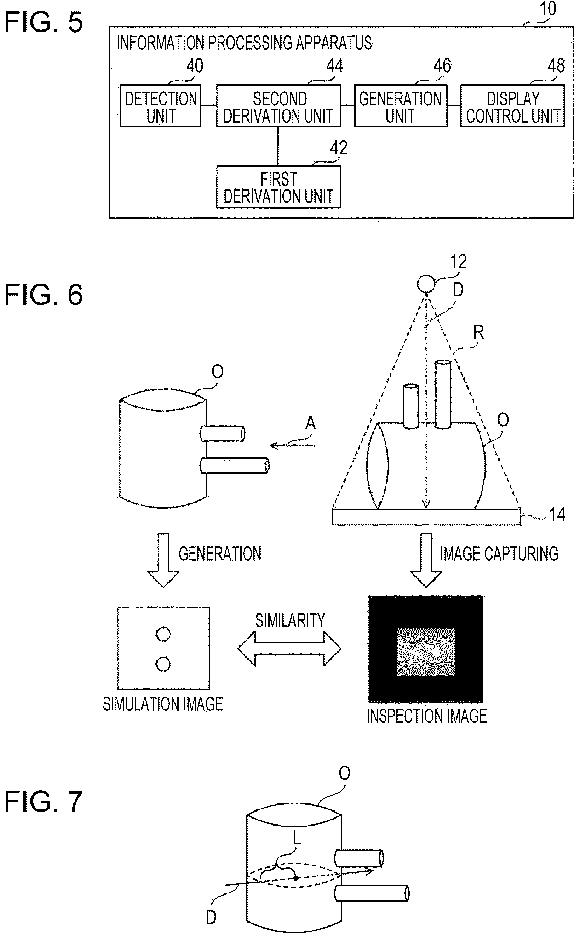

Next, a functional configuration of the information processing apparatus 10 according to the present embodiment will be described with reference to Fig. 5. As illustrated in Fig. 5, the information processing apparatus 10 includes a detection unit 40, a first derivation unit 42, a second derivation unit 44, a generation unit 46, and a display control unit 48. The CPU 20 executes the information processing program 30 to function as the detection unit 40, the first derivation unit 42, the second derivation unit 44, the generation unit 46, and the display control unit 48.

The detection unit 40 detects, based on the inspection image and the trained model 34 stored in the storage unit 22, a discontinuity of the inspection target object O in the inspection image. Specifically, the detection unit 40 inputs the inspection image to the trained model 34. The trained model 34 outputs information on the discontinuity of the inspection target object O corresponding to the input inspection image. Accordingly, the detection unit 40 detects the discontinuity of the inspection target object O in the inspection image.

The detection unit 40 may detect the discontinuity of the inspection target object O in the inspection image by a known detection algorithm. The discontinuity of the inspection target object O in the inspection image may be designated by the user via the input device 24. In this case, the detection unit 40 detects the discontinuity designated by the user.

The first derivation unit 42 derives a conversion parameter that is for converting a position in the two-dimensional inspection image into a position in the three-dimensional structure information 32 and that includes the irradiation direction D in the structure information 32. A specific example of a process of deriving the irradiation direction D in the structure information 32 by the first derivation unit 42 will be described with reference to Fig. 6.

As illustrated on the right side of Fig. 6, the two-dimensional inspection image is obtained by being captured by irradiating the inspection target object O with the radiation R along the irradiation direction D from the radiation source 12. As illustrated on the left side of Fig. 6, the first derivation unit 42 generates a two-dimensional simulation image by projecting the inspection target object O along a viewpoint direction for a virtual inspection target object O displayed on the display 23 on the basis of the structure information 32. The viewpoint direction is a direction in which when the virtual inspection target object O is viewed, the surface of the inspection target object O appears as the front surface of the display screen. The example on the left side of Fig. 6 presents an example in which a simulation image when the virtual inspection target object O based on the structure information 32 is viewed from the right side of Fig. 6, that is, in the direction of an arrow A, is generated. For example, the viewpoint direction is represented by coordinates of one point, and a direction passing through the origin from the coordinates is the viewpoint direction.

The first derivation unit 42 generates respective simulation images for a plurality of different viewpoint directions. Further, the first derivation unit 42 derives a level of similarity between each of the generated simulation images and the inspection image. Specifically, for example, the first derivation unit 42 derives a level of similarity between the silhouette of the inspection target object O in the simulation image and the silhouette of the inspection target object O in the inspection image. The first derivation unit 42 may extract a contour line of the inspection target object O in the simulation image and a contour line of the inspection target object O in the inspection image and derive a level of similarity between outer shapes of the inspection target object O configured by the extracted contour lines.

Then, the first derivation unit 42 sets the viewpoint direction for the simulation image having the highest level of similarity to the inspection image as the irradiation direction D in the structure information 32.

The second derivation unit 44 derives the three-dimensional coordinates of the discontinuity in the structure information 32 by converting the position of the discontinuity of the inspection target object O in the inspection image detected by the detection unit 40 into the position of the discontinuity in the structure information 32 by using the irradiation direction D derived by the first derivation unit 42. The second derivation unit 44 may acquire the irradiation direction D derived by an external device, instead of the first derivation unit 42, via the network I/F 25.

Specifically, first, the second derivation unit 44 converts the position of the discontinuity of the inspection target object O in the inspection image into the position in the structure information 32 in a plane for which the irradiation direction D is set as the viewpoint direction. For example, the second derivation unit 44 can perform the conversion described above by a process of matching the scale of the outer shape of the inspection target object O in the inspection image with the scale of the outer shape of the virtual inspection target object O viewed from the irradiation direction D in the structure information 32.

In this way, the position of the discontinuity of the inspection target object O in a plane in a case where the virtual inspection target object O is viewed from the irradiation direction D in the structure information 32 can be determined. Accordingly, as illustrated in Fig. 7, if a depth L of the discontinuity along the irradiation direction D can be determined, the three-dimensional coordinates of the discontinuity in the structure information 32 can be determined.

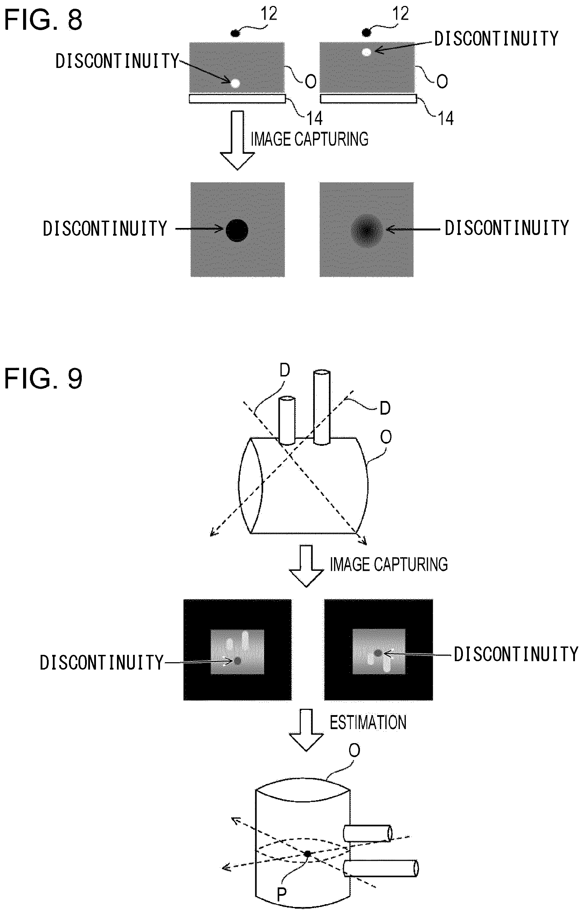

The second derivation unit 44 according to the present embodiment derives the depth of the discontinuity along the irradiation direction D on the basis of one inspection image. As illustrated in Fig. 8, as the depth of the discontinuity along the irradiation direction D decreases, that is, as the distance of the discontinuity from the radiation detector 14 increases, the degree of blur of the region of the discontinuity in the inspection image increases. This is because the farther the discontinuity is from the radiation detector 14, the more likely it is that the discontinuity is affected by scattered radiation or the like. Accordingly, the second derivation unit 44 derives the depth of the discontinuity along the irradiation direction D on the basis of the degree of blur of the region of the discontinuity in the inspection image. Specifically, the second derivation unit 44 derives the depth of the discontinuity along the irradiation direction D as a larger value for a larger degree of blur of the region of the discontinuity in the inspection image. Then, the second derivation unit 44 derives a position separated from the position corresponding to the surface of the inspection target object O in the structure information 32 by the derived depth along the irradiation direction D as the position of the discontinuity in the structure information.

The above processing allows the second derivation unit 44 to convert the position of the discontinuity of the inspection target object O in the two-dimensional inspection image into the three-dimensional coordinates in the structure information 32.

The second derivation unit 44 may convert the position of the discontinuity of the inspection target object O in the inspection image into the position of the discontinuity in the structure information 32 on the basis of a plurality of inspection images captured from a plurality of different irradiation directions D. In this case, the second derivation unit 44 converts the position of the discontinuity in each of the plurality of inspection images into a position in the structure information 32 in a plane for which each of the irradiation directions D is set as the viewpoint direction, by using the irradiation directions D derived by the first derivation unit 42. Then, as illustrated in Fig. 9, the second derivation unit 44 derives, as the position of the discontinuity in the structure information 32, an intersection point P of a plurality of straight lines each extending along one of the irradiation directions D and each passing through the position of the discontinuity after the conversion for one of the plurality of inspection images. Fig. 9 illustrates an example for two inspection images.

The generation unit 46 generates data in which the structure information 32 and the position of the discontinuity in the structure information 32 derived by the second derivation unit 44 are integrated. For example, the generation unit 46 generates data in which the position of the discontinuity in the structure information 32 derived by the second derivation unit 44 is included in the property of a data file representing the structure information 32.

The display control unit 48 performs control to display the virtual inspection target object O and an object representing the discontinuity on the display 23 on the basis of the data generated by the generation unit 46. The object representing the discontinuity may be, for example, a mark such as a circle or an image of the region of the discontinuity in the inspection image.

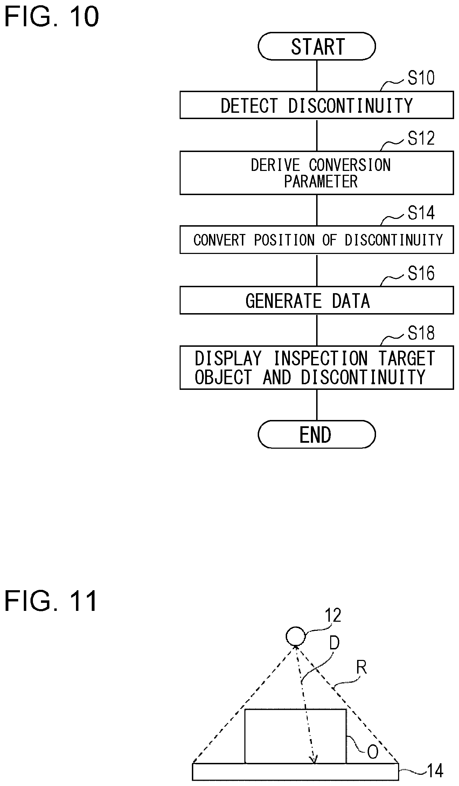

Next, the operation of the information processing apparatus 10 according to the present embodiment will be described with reference to Fig. 10. When the CPU 20 executes the information processing program 30, a discontinuity position conversion process illustrated in Fig. 10 is executed. The discontinuity position conversion process illustrated in Fig. 10 is executed when, for example, the user inputs an instruction to start execution of the discontinuity position conversion process.

In step S10 of Fig. 10, as described above, the detection unit 40 detects, based on the inspection image and the trained model 34 stored in the storage unit 22, a discontinuity of the inspection target object O in the inspection image. In step S12, as described above, the first derivation unit 42 derives a conversion parameter that is for converting a position in the two-dimensional inspection image into a position in the three-dimensional structure information 32 and that includes the irradiation direction D in the structure information 32.

In step S14, as described above, the second derivation unit 44 converts the position of the discontinuity of the inspection target object O in the inspection image detected in step S10 into the position of the discontinuity in the structure information 32 by using the irradiation direction D derived in step S12.

In step S16, the generation unit 46 generates data in which the structure information 32 and the position of the discontinuity in the structure information 32 derived in step S14 are integrated. In step S18, the display control unit 48 performs control to display the virtual inspection target object O and an object representing the discontinuity on the display 23 on the basis of the data generated in step S16. When the processing of step S18 is finished, the discontinuity position conversion process ends.

As described above, according to the present embodiment, the position of the discontinuity of the inspection target object O can be determined as a three-dimensional position on the basis of not a tomographic image such as a CT image but a simple X-ray image. This allows the user to grasp the position of the discontinuity of the inspection target object O as a three-dimensional position. According to the present embodiment, therefore, the inspection efficiency of non-destructive inspection can be improved.

In the embodiment described above, as illustrated in Fig. 11, when the second derivation unit 44 derives the three-dimensional coordinates of the discontinuity, the irradiation direction D may be set to a direction inclined with respect to the direction from the radiation source 12 to the center of the inspection target object O.

In the embodiment described above, furthermore, the conversion parameter may include correction data for correcting a distortion of the inspection image, in addition to the irradiation direction D.

In the embodiment described above, furthermore, the hardware structures of processing units that execute various processes, such as the functional units of the information processing apparatus 10, may be implemented using various processors described below. As described above, the various processors described above include a CPU that is a general-purpose processor configured to execute software (program) to function as various processing units, and further include a programmable logic device (PLD) that is a processor whose circuit configuration can be changed after manufacturing, such as a field programmable gate array (FPGA), a dedicated electric circuit that is a processor having a circuit configuration designed exclusively for executing specific processing, such as an application specific integrated circuit (ASIC), and so on.

One processing unit may be constituted by one of these various processors, or may be constituted by a combination of two or more processors of the same type or different types (e.g., a combination of a plurality of FPGAs or a combination of a CPU and an FPGA). Alternatively, a plurality of processing units may be configured by one processor.

Examples of configuring a plurality of processing units by one processor include, first, a form in which, as typified by a computer such as a client and a server, one processor is configured by a combination of one or more CPUs and software and the processor functions as a plurality of processing units. The examples include, second, a form in which, as typified by a system on chip (SoC) or the like, a processor is used that implements the functions of the entire system including a plurality of processing units by one integrated circuit (IC) chip. As described above, the various processing units are configured by using one or more of the various processors described above as a hardware structure.

More specifically, the hardware structure of these various processors may be an electric circuit (circuitry) in which circuit elements such as semiconductor elements are combined.

The embodiment described above has described an embodiment in which the information processing program 30 is stored (installed) in the storage unit 22 in advance, but is not limited to this embodiment. The information processing program 30 may be provided in a form recorded in recording media such as a compact disc read only memory (CD-ROM), a digital versatile disc read only memory (DVD-ROM), and a universal serial bus (USB) memory. Alternatively, in an embodiment, the information processing program 30 may be downloaded from an external device via a network.

The disclosure of JP2022-099870 filed on June 21, 2022 is incorporated herein by reference in its entirety. All publications, patent applications, and technical standards mentioned herein are incorporated herein by reference to the same extent as if each individual publication, patent application, or technical standard was specifically and individually indicated to be incorporated by reference.

## Claims

1. An information processing apparatus comprising:
at least one processor,
wherein the processor is configured to:
acquire a conversion parameter for converting a position in an inspection image captured by irradiating an inspection target object with radiation along an irradiation direction into a position in structure information representing a three-dimensional structure of the inspection target object, the conversion parameter including the irradiation direction in the structure information; and
convert a position of a discontinuity of the inspection target object in the inspection image into a position in the structure information by using the conversion parameter.

2. The information processing apparatus according to claim 1, wherein:
the processor is configured to:
derive a depth of the discontinuity along the irradiation direction, based on the inspection image; and
derive, as a position of the discontinuity in the structure information, a position separated from a position corresponding to a surface of the inspection target object in the structure information by the derived depth along the irradiation direction.

3. The information processing apparatus according to claim 2, wherein:
the processor is configured to
derive the depth of the discontinuity, based on a degree of blur of a region of the discontinuity in the inspection image.

4. The information processing apparatus according to claim 1, wherein:
a plurality of the inspection images are captured from a plurality of different irradiation directions, and
the processor is configured to:
convert a position of the discontinuity in each of the plurality of the inspection images into a position in the structure information in a plane for which each of the irradiation directions is set as a viewpoint direction, by using the conversion parameter; and
derive, as a position of the discontinuity in the structure information, an intersection point of a plurality of straight lines each extending along one of the irradiation directions and each passing through the position of the discontinuity after conversion for one of the plurality of the inspection images.

5. The information processing apparatus according to any one of claims 1 to 4, wherein:
the processor is configured to
integrate the structure information and a position of the discontinuity in the structure information into data.

6. An information processing method in which a processor included in an information processing apparatus executes processing comprising:
acquiring a conversion parameter for converting a position in an inspection image captured by irradiating an inspection target object with radiation along an irradiation direction into a position in structure information representing a three-dimensional structure of the inspection target object, the conversion parameter including the irradiation direction in the structure information; and
converting a position of a discontinuity of the inspection target object in the inspection image into a position in the structure information by using the conversion parameter.

7. An information processing program for causing a processor included in an information processing apparatus to execute processing comprising:
acquiring a conversion parameter for converting a position in an inspection image captured by irradiating an inspection target object with radiation along an irradiation direction into a position in structure information representing a three-dimensional structure of the inspection target object, the conversion parameter including the irradiation direction in the structure information; and
converting a position of a discontinuity of the inspection target object in the inspection image into a position in the structure information by using the conversion parameter.

## Amended claims

### Amended claims under Art. 19.1 PCT

1. An information processing apparatus comprising:
at least one processor,
wherein the processor is configured to:
acquire a conversion parameter for converting a position in an inspection image captured by irradiating an inspection target object with radiation along an irradiation direction into a position in structure information representing a three-dimensional structure of the inspection target object, the conversion parameter including the irradiation direction in the structure information; and
convert a position of a discontinuity of the inspection target object in the inspection image into a position in the structure information by using the conversion parameter.

2. The information processing apparatus according to claim 1, wherein:
the processor is configured to:
derive a depth of the discontinuity along the irradiation direction, based on the inspection image; and
derive, as a position of the discontinuity in the structure information, a position separated from a position corresponding to a surface of the inspection target object in the structure information by the derived depth along the irradiation direction.

3. The information processing apparatus according to claim 2, wherein:
the processor is configured to
derive the depth of the discontinuity, based on a degree of blur of a region of the discontinuity in the inspection image.

4. The information processing apparatus according to claim 1, wherein:
a plurality of the inspection images are captured from a plurality of different irradiation directions, and
the processor is configured to:
convert a position of the discontinuity in each of the plurality of the inspection images into a position in the structure information in a plane for which each of the irradiation directions is set as a viewpoint direction, by using the conversion parameter; and
derive, as a position of the discontinuity in the structure information, an intersection point of a plurality of straight lines each extending along one of the irradiation directions and each passing through the position of the discontinuity after conversion for one of the plurality of the inspection images.

5. The information processing apparatus according to any one of claims 1 to 4, wherein:
the processor is configured to
integrate the structure information and a position of the discontinuity in the structure information into data.

6. An information processing method in which a processor included in an information processing apparatus executes processing comprising:
acquiring a conversion parameter for converting a position in an inspection image captured by irradiating an inspection target object with radiation along an irradiation direction into a position in structure information representing a three-dimensional structure of the inspection target object, the conversion parameter including the irradiation direction in the structure information; and
converting a position of a discontinuity of the inspection target object in the inspection image into a position in the structure information by using the conversion parameter.

7. An information processing program for causing a processor included in an information processing apparatus to execute processing comprising:
acquiring a conversion parameter for converting a position in an inspection image captured by irradiating an inspection target object with radiation along an irradiation direction into a position in structure information representing a three-dimensional structure of the inspection target object, the conversion parameter including the irradiation direction in the structure information; and
converting a position of a discontinuity of the inspection target object in the inspection image into a position in the structure information by using the conversion parameter.

8. [Addition] The information processing apparatus according to any one of claims 1 to 4, wherein:
the processo is configured to
convert a position of the discontinuity based on at least one of the inspection image.

9. [Addition] The information processing apparatus according to any one of claims 1 to 4, wherein:
the processor is configured to
acquire the conversion parameter based on a virtual inspection image generated based on the structure information.

10. [Addition] The information processing apparatus according to any one of claims 1 to 4, wherein:
the processor is configured to
acquire the conversion parameter based on a level of similarity between a silhouette of the virtual inspection target object generated based on the structure information and a silhouette of the inspection target object obtained from the inspection image.

11. [Addition] The information processing apparatus according to any one of claims 1 to 4, wherein:
the processor is configured to:
generate a plurality of two-dimensional simulation images by assuming that the inspection target object is projected along each of a plurality of different viewpoint directions based on the structure information, and
derive the irradiation direction in the structure information based on a level of similarity between the inspection image and each of the two-dimensional simulation images.
